# EUROPÄISCHE PATENTSCHRIFT

(11) **EP 1 134 406 B1**
(45) Veröffentlichungstag und Bekanntmachung des Hinweises auf die Patenterteilung: **09.02.2005**
(21) Anmeldenummer: 01105945.8
(22) Anmeldetag: 09.03.2001
(51) Int. Cl.: F02M 55/00, F02M 69/46

(54) **Brennkraftmaschine mit Einspritzventilen**
Internal combustion engine with injection valves
Moteur à combustion interne avec injecteurs

(30) Priorität: 16.03.2000 DE 10012759
(43) Veröffentlichungstag der Anmeldung: 19.09.2001
(73) Patentinhaber: Volkswagen Aktiengesellschaft, 38436 Wolfsburg (DE)
(72) Erfinder: Lippert, Eduard, 38547 Calberlah (DE); Höfner, Dirk, 91809 Wellheim (DE)

(56) Entgegenhaltungen:
- EP-A- 0 969 203
- WO-A-99/00595
- DE-A- 2 827 878
- DE-A- 19 748 593

## Beschreibung

Die Erfindung betrifft eine Brennkraftmaschine, insbesondere Ottomotor mit Direkteinspritzung, gemäß dem Oberbegriff des Anspruchs 1.

Aus der DE 197 48 593 A1 ist eine Hochdruck-Kraftstoffeinspritzvorrichtung für eine Brennkraftmaschine, wie beispielsweise für einen Otto-Motor, bekannt, welche Einspritzdüsen für eine Benzin-Direkteinspritzung sowie einen diesen Einspritzdüsen vorgeschalteten Kraftstoff-Hochdruckspeicher (common rail) umfaßt. Zur Erzielung einer im Aufbau einfachen und leicht montierbaren Einspritzvorrichtung wird vorgeschlagen, daß der Hochdruckspeicher mit lösbar gehaltenen Einspritzdüsen eine Montageeinheit bildet und diese in Montagerichtung der Einspritzdüsen am Maschinengehäuse lösbar festgelegt ist, wobei zwischen dem im Maschinengehäuse auf Anschlag angeordneten Einspritzdüsen und den sie über Steckverbindungen aufnehmenden Anschlußstutzen des Hochdruckspeichers ein kraftübertragend angeordnetes Federelement, wie beispielsweise eine Tellerfeder, vorgespannt angeordnet ist. Hierbei ergibt sich jedoch der Nachteil, daß die Aufnahmebohrungen sowie die Anschlußstutzen des Hochdruckspeichers mit besonders geringer Toleranz gefertigt sein müssen, da sich ansonsten durch Fehlanpassungen Undichtigkeiten innerhalb der Aufnahmen der Einspritzdüsen ergeben.

Aus der WO99/00595 ist eine Brennstoffeinspritzanlage zum direkten Einspritzen von Brennstoffen in zumindest einen Brennraum einer Brennkraftmaschine bekannt. Die Brennstoffeinspritzanlage umfasst zumindest ein Brennstoffeinspritzventil für jeden Brennraum, das jeweils an einem Abspritzabschnitt in eine zugeordnete, an dem Zylinderkopf der Brennkraftmaschine ausgebildete Aufnahmebohrung einsetzbar ist und an einem Zulaufabschnitt eine Brennstoff-Einlassöffnung aufweist. Die Brennstoffeinspritzanlage umfasst ferner eine Brennstoff-Verteilerleitung, die für jedes Brennstoffeinspritzventil eine mit der Brennstoff-Einlassöffnung des Brennstoffeinspritzventils verbindbare Brennstoff-Auslassöffnung aufweist. Entsprechend einer erfindungsgemäßen Weiterbildung ist jeweils ein zwischen der Brennstoff-Einlassöffnung jedes Brennstoffeinspritzventils und der zugeordneten Brennstoff-Auslassöffnung angeordnetes, rohrförmiges Zwischenstück vorgesehen, welches mit der Brennstoff-Einlassöffnung des zugeordneten Brennstoffeinspritzventils und der Brennstoff-Auslassöffnung der Brennstoff-Verteilerleitung dichtend und in vorgegebenen Grenzen beweglich verbindbar ist. Ein Flansch des Brennstoffeinspritzventils liegt auf einer planen Stützfläche des Zylinderkopfes auf und wird mittels einer Spannpratze gegen die Stützfläche des Zylinderkopfes gepresst. Die von der Spannpratze ausgeübte Niederhaltekraft ist dabei größer als die von dem Verbrennungsdruck der Verbrennungsgase in dem Brennraum ausgeübte Gegenkraft, so dass der Abspritzabschnitt des Brennstoffeinspritzventils auch bei hohem Verbrennungsdruck sicher an dem Zylinderkopf fixiert ist. Die Spannpratze besteht aus einem, z. B. gabelförmig ausgebildeten Spannhebel, der an einem Auflageabschnitt auf dem Flansch des Brennstoffeinspritzventils aufliegt. Der Spannhebel liegt an seinem dem Auflageabschnitt gegenüberliegenden Ende auf dem Zylinderkopf auf und wird mittels einer Spannschraube, die in eine Gewindebohrung des Zylinderkopfes einschraubbar ist, gegen den Zylinderkopf vorgespannt.

Der vorliegenden Erfindung liegt die Aufgabe zugrunde, eine Brennkraftmaschine der obengenannten Art dahingehend zu verbessern, daß eine Teilevielfalt, Kosten und ein Montageaufwand bzgl. der Kraftstoffeinspritzung reduziert wird.

Diese Aufgabe wird erfindungsgemäß durch eine Brennkraftmaschine der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, dass die Kraftstoffverteilerleiste bzgl. des Zylinderkopfes fixiert angeordnet ist und das Federelement zwischen Kraftstoffverteilerleiste und Einspritzventil derart angeordnet ist, dass sich dieses an der Kraftstoffverteilerleiste abstützt, wobei das Federelement und der Sitzring derart ausgebildet sind, dass diese zusammen mit dem Einspritzventil zu einer Einheit verbindbar sind.

Dies hat den Vorteil, daß eine gelenkige Verbindung zwischen der Kraftstoffverteilerleiste und dem Einspritzventil zur Verfügung steht, welche Toleranzen ausgleichend das Einspritzventil in der Aufnahmebohrung axial und radial fixiert, wobei das Einspritzventil anschlagend an dem Sitzring innerhalb der Aufnahme in einem vorbestimmten Bereich verkippen kann, ohne daß sich an dieser Stelle Undichtigkeiten ergeben. Hierbei kann der Sitzring auf seiner Planfläche radial ausweichen, wobei durch die gekrümmte oder ballige Anschlagfläche trotzdem immer eine geschlossene Berührlinie bzw. -fläche an der Berührkontur zwischen Einspritzventil und Sitzring bzw. zwischen Sitzring und Anschlag erhalten bleibt. Somit ist eine Zwischenhülse zwischen Kraftstoffverteilerleiste und Einspritzventil zum Ausgleich von Toleranzen sowie eine sich aufgrund der Zwischenhülse ergebende Dichtungsstelle eingespart. Dies reduziert einen Montageaufwand und entsprechende Herstellungs- und Montagekosten. Ferner ist eine Vormontage von Einspritzventil, Sitzring und Federelement möglich, so dass diese Teile nicht einzeln in die Aufnahmebohrung für das Einspritzventil aufgenommen werden müssen.

Eine weitere Verbesserung der Berührkontur zwischen Einspritzventil und Sitzring erzielt man dadurch, daß eine Kontur einer an der einspritzventilseitigen Anschlagfläche des Sitzringes anschlagenden Fläche des Einspritzventils ballig ausgebildet ist.

Zweckmäßigerweise ist der Sitzring aus Kunststoff hergestellt, wobei optional der Sitzring eine Einrichtung zum Verbinden mit dem Federelement, insbesondere mittels Einklipsen, aufweist.

Zum Sicherstellen einer korrekten Ausrichtung eines Einspritzstrahls des Einspritzventils, insbesondere bei Einspritzventilen mit asymmetrischem Einspritzstrahl, ist das Federelement derart ausgebildet, daß es mechanisch zusammenwirkend mit einer Einrichtung an der Kraftstoffverteilerleiste eine Verdrehsicherung des Einspritzventils in der Aufnahmebohrung ausbildet.

Zweckmäßigerweise ist ein Dichtring zwischen Einspritzventil und Aufnahmebohrung derart angeordnet und ausgebildet, daß bei einem Verkippen des Einspritzventils in der Aufnahmebohrung eine Verspannung vermieden ist.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: einen Teil einer bevorzugten Ausführungsform eines Zylinderkopfes einer erfindungsgemäßen Brennkraftmaschine in schematischer Schnittansicht,
- Fig. 2: eine Schnittansicht einer bevorzugten Ausführungsform eines Sitzringes,
- Fig. 3: eine alternative bevorzugte Ausführungsform einer Anordnung aus Sitzring und Federelement, welche zu einer Einheit verbindbar sind, in perspektivischer Ansicht und
- Fig. 4: in Schnittansicht.

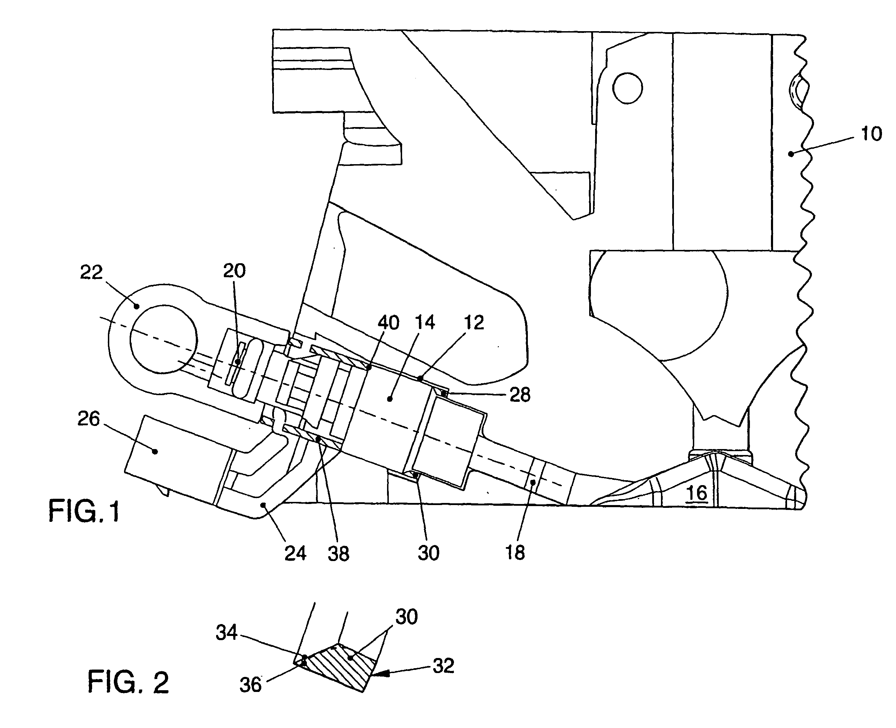

Der aus Fig. 1 ersichtliche Zylinderkopf 10 eines ansonsten nicht näher dargestellten Otto-Motors umfaßt eine Aufnahmebohrung 12 für ein Hochdruck-Einspritzventil 14, welches direkt in einen Brennraum 16 Kraftstoff einspritzt. Ein Dichtring 18 umgreift das Hochdruck-Einspritzventil 14 und dichtet die Aufnahmebohrung 12 gegen den Brennraum 16 ab. An einem Einspritzventil-Ende 20 ist das Hochdruck-Einspritzventil 14 mit einer Kraftstoffverteilerleiste 22 (common rail) verbunden, welche mehrere zylinderindividuelle Einspritzventile miteinander und mit einer nicht dargestellten Kraftstoffzuführung verbindet. An einem Ausleger 24 ist ferner eine Steckvorrichtung 26 zum Verbinden mit einer nicht dargestellten Ventilsteuerung vorgesehen.

In der Aufnahmebohrung 12 ist ein Anschlag 28 plan und etwas tiefer als üblich ausgebohrt. In diesem Bereich ist zwischen Anschlag 28 und Hochdruck-Einspritzventil 14 ein Sitzring 30 angeordnet. Wie aus Fig. 2 ersichtlich, ist eine am Anschlag 28 anliegende Fläche 32 des Sitzringes 30 ebenfalls plan ausgebildet. Eine weitere, gegenüberliegende Anschlagfläche 34 des Sitzringes 30 für das Hochdruck-Einspritzventil 14 ist dagegen kegelförmig oder, wie mit Linie 36 angedeutet, ballig ausgebildet. Alternativ kann die gekrümmte oder ballige Anschlagfläche 34 des Sitzringes 30 auch dem Anschlag 28 zugewandt sein. Hier ist dann die plane Anschlagfläche 32 dem Hochdruck-Einspritzventil 14 zugewandt.

Wie weiterhin aus Fig. 1 ersichtlich, ist zwischen Kraftstoffverteilerleiste 22 und Hochdruck-Einspritzventil 14 ein Federelement 38 angeordnet, welches sich an der Kraftstoffverteilerleiste 22 abstützt und an einer Schulter 40 des Hochdruck-Einspritzventils 14 anschlägt. Das Federelement 38 ist dabei mit einer Vorspannung derart eingebaut, daß dieses das Hochdruck-Einspritzventil 14 gegen den Sitzring 30 drückt.

Bei der Montage wird der Sitzring 30 auf das Hochdruck-Einspritzventil 14 aufgeschoben und mit diesem zusammen in die Aufnahmebohrung 12 im Zylinderkopf 10 bis auf Anschlag eingeführt. Axial ist das Hochdruck-Einspritzventil 14 nun fixiert. Radial läßt es sich noch mit dem Sitzring 30 an der planen Fläche 28 in alle Richtungen begrenzt bewegen bzw. verkippen. Wird nun die Kraftstoffverteilerleiste 22 auf das Hochdruck-Einspritzventil 14 aufgeschoben, so richtet sich dieses nach entsprechenden Aufnahmebohrungen der Kraftstoffverteilerleiste 22 aus und verkippt ggf. auf dem Sitzring 30 in der Aufnahmebohrung 12. Der Sitzring 30 kann hierbei mit seiner planen Seite 32 radial ausweichen, wobei durch die kegelige oder ballige Ausführung der Anschlagseite 34 immer eine geschlossene Anschlagfläche bzw. -linie zwischen Hochdruck-Einspritzventil 14 und Sitzring 30 sichergestellt ist. Sofern die kegelig oder ballig ausgeführte Anschlagseite 34 dem Anschlag 28 zugewandt ist, ist immer eine geschlossene Anschlagfläche bzw. -linie zwischen Sitzring 30 und Anschlag 28 sichergestellt. Allgemein wird durch den Sitzring 30, wie auch immer dieser ausgerichtet ist, eine gelenkartige Anlage zwischen Hochdruck-Einspritzventil 14 und Anschlag 28 erzielt.

Bei weiterem Einführen der Kraftstoffverteilerleiste 22 auf seine endgültige Position drückt die Kraftstoffverteilerleiste 22 auf das Federelement 38 und preßt somit das Hochdruck-Einspritzventil 14 axial und radial fest. Durch das begrenzte Verkippen des Hochdruck-Einspritzventils 14 erfolgt automatisch ein Ausgleich von Toleranzen, welche sich ggf. zwischen der Kraftstoffverteilerleiste 22 und den Aufnahmebohrungen 12 ergeben. Sonst übliche Einspritzventilhalter und toleranzausgleichende Zwischenhülsen zwischen Kraftstoffverteilerleiste 22 und Hochdruck-Einspritzventils 14 können entfallen, wobei gleichzeitig Undichtigkeiten im Bereich des Anschlages 28 der Aufnahmebohrung 12 durch toleranzbedingtes verkippen des Hochdruck-Einspritzventils 14 vermieden sind.

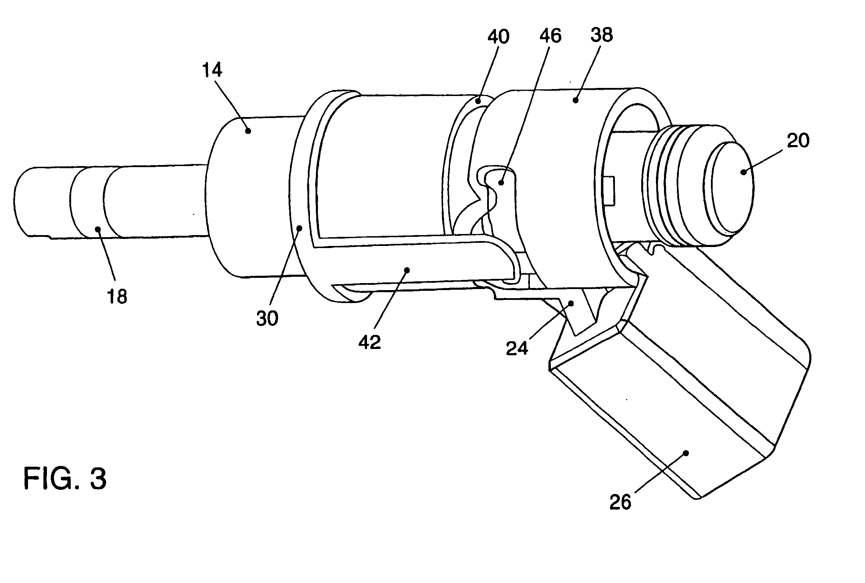

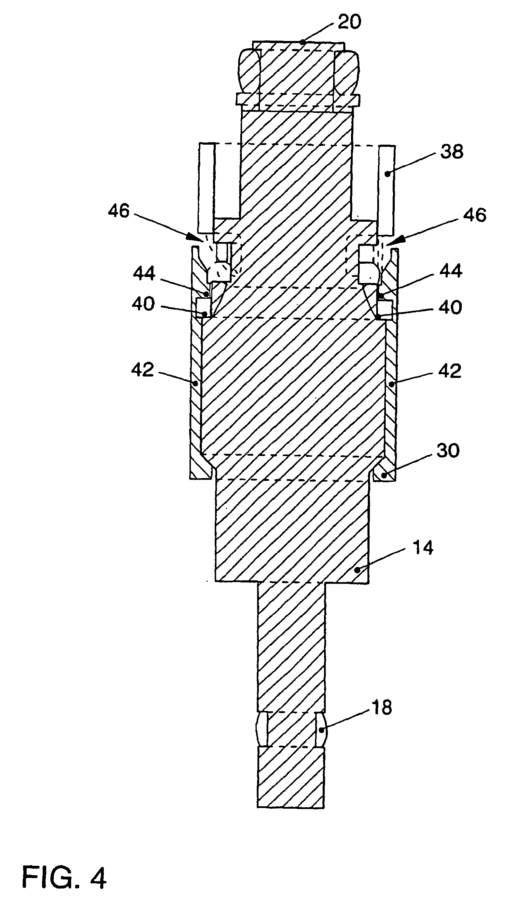

Bei der aus Fig. 3 und 4 ersichtlichen Ausführungsform sind das Federelement 38 und der Sitzring 30 derart ausgebildet, daß diese zusammen mit dem Einspritzventil 14 zu einer Einheit, beispielsweise mittels einklipsen, verbindbar sind. Hierzu weist der Sitzring zwei Arme 42 auf, welche sich entlang des Einspritzventils über die Schulter 40 erstrecken und an ihren Enden jeweils eine Nase 44 aufweisen, die in eine entsprechende Ausnehmung 46 am Federelement 38 greift. Die so vormontierte Einheit aus Einspritzventil 14, Federelement 38 und Sitzring 30 kann dann bei der Montage des Zylinderkopfes einfach in eine entsprechende Aufnahmebohrung 12 eingeschoben werden, wobei Sitzring 30 sowie Federelement 38 sofort richtig positioniert sind.

Ferner ist aus Fig. 4 eine Ausführungsform des Dichtringes 18 ersichtlich, welche eine Verspannung im Bereich des Dichtringes 18 bei einem Verkippen des Einspritzventils 14 in der Aufnahmebohrung 12 verhindert. Hierzu weist das Einspritzventil 14 an einer entsprechenden Stelle eine Einschnürung auf, welche von dem Dichtring vollständig ausgefüllt wird.

## Patentansprüche

1. Brennkraftmaschine, insbesondere Ottomotor mit Direkteinspritzung, insbesondere für ein Kraftfahrzeug, mit einem Zylinderkopf (10) mit Aufnahmebohrungen (12) für jeweilige Einspritzventile (14) und mit einer Kraftstoffverteilerleiste (22), welche die Einspritzventile (14) miteinander sowie mit einer Kraftstoffzuführung verbindet, wobei ein Federelement (38) derart angeordnet ist, dass es das Einspritzventil (14) in Richtung der Aufnahmebohrung (12) mit Kraft beaufschlagt und gegen einen Anschlag (28) in der Aufnahmebohrung (12) drückt, wobei der Anschlag (28) in der Aufnahmebohrung (12) plan ausgebildet ist und zwischen dem Einspritzventil (14) und dem Anschlag (28) ein Sitzring (30) mit einer einspritzventilseitigen Anschlagfläche (34) und einer anschlagseitigen Anschlagfläche (32) vorgesehen ist, wobei die einspritzventilseitige Anschlagfläche (34) des Sitzringes (30) gekrümmt oder kegelförmig und die anschlagseitige Anschlagfläche (32) des Sitzringes (30) plan ausgebildet ist, oder umgekehrt, **dadurch gekennzeichnet, dass** die Kraftstoffverteilerleiste (22) bzgl. des Zylinderkopfes (10) fixiert angeordnet ist und das Federelement (38) zwischen Kraftstoffverteilerleiste (22) und Einspritzventil (14) derart angeordnet ist, dass sich dieses an der Kraftstoffverteilerleiste (22) abstützt, wobei das Federelement (38) und der Sitzring (30) derart ausgebildet sind, dass diese zusammen mit dem Einspritzventil (14) zu einer Einheit verbindbar sind.

2. Brennkraftmaschine nach Anspruch 1, **dadurch gekennzeichnet, daß** die einspritzventilseitige Anschlagfläche (34) des Sitzringes (30) ballig ausgebildet ist.

3. Brennkraftmaschine nach einem der vorhergehenden Ansprüche, **dadurch gekennzeichnet, daß** eine Kontur einer an der einspritzventilseitigen Anschlagfläche (34) des Sitzringes (30) anschlagenden Fläche des Einspritzventils (14) ballig ausgebildet ist.

4. Brennkraftmaschine nach einem der vorhergehenden Ansprüche, **dadurch gekennzeichnet, daß** der Sitzring (30) aus Kunststoff hergestellt ist.

5. Brennkraftmaschine nach einem der vorhergehenden Ansprüche, **dadurch gekennzeichnet, daß** der Sitzring (30) eine Einrichtung zum Verbinden mit dem Federelement (38), insbesondere mittels Einklipsen, aufweist.

6. Brennkraftmaschine nach einem der vorhergehenden Ansprüche, **dadurch gekennzeichnet, daß** das Federelement (38) derart ausgebildet ist, daß es mechanisch zusammenwirkend mit einer Einrichtung an der Kraftstoffverteilerleiste (22) eine Verdrehsicherung des Einspritzventils (14) in der Aufnahmebohrung (12) ausbildet.

7. Brennkraftmaschine nach einem der vorhergehenden Ansprüche, **dadurch gekennzeichnet, daß** ein Dichtring (18) zwischen Einspritzventil (14) und Aufnahmebohrung (12) derart angeordnet und ausgebildet ist, daß bei einem Verkippen des Einspritzventils (14) in der Aufnahmebohrung (12) eine Verspannung vermieden ist.

## Claims

1. Internal combustion engine, in particular spark-ignition engine with direct injection, in particular for a motor vehicle, having a cylinder head (10) with receiving bores (12) for respective injection valves (14) and having a fuel rail (22) which connects the injection valves (14) to one another and to a fuel supply, a spring element (38) being arranged in such a manner that it acts upon the injection valve (14) with force in the direction of the receiving bore (12) and presses it against a stop (28) in the receiving bore (12), the stop (28) in the receiving bore (12) being of flat design and a seat ring (30) being provided between the injection valve (14) and the stop (28), the said seat ring having an injection-valve-side stop surface (34) and a stop-side stop surface (32), the injection-valve-side stop surface (34) of the seat ring (30) being of curved or conical design and the stop-side stop surface (32) of the seat ring (30) being of flat design, or vice versa, **characterized in that** the fuel rail (22) is arranged in a fixed manner with respect to the cylinder head (10) and the spring element (38) is arranged between the fuel rail (22) and injection valve (14) in such a manner that the latter is supported on the fuel rail (22), the spring element (38) and the seat ring (30) being designed in such a manner that they can be connected together with the injection valve (14) to form a unit.

2. Internal combustion engine according to Claim 1, **characterized in that** the injection-valve-side stop surface (34) of the seat ring (30) is of spherical design.

3. Internal combustion engine according to one of the preceding claims, **characterized in that** a contour of a surface of the injection valve (14) that strikes against the injection-valve-side stop surface (34) of the seat ring (30) is of spherical design.

4. Internal combustion engine according to one of the preceding claims, **characterized in that** the seat ring (30) is produced from plastic.

5. Internal combustion engine according to one of the preceding claims, **characterized in that** the seat ring (30) has a device for connection to the spring element (38), in particular by means of clipping in.

6. Internal combustion engine according to one of the preceding claims, **characterized in that** the spring element (38) is designed in such a manner that, interacting mechanically with a device on the fuel rail (22), it forms a means of securing the injection valve (14) in the receiving bore (12).

7. Internal combustion engine according to one of the preceding claims, **characterized in that** a sealing ring (18) is arranged and designed between the injection valve (14) and receiving bore (12) in such a manner that, when the injection valve (14) tilts in the receiving bore (12), a distortion is avoided.

## Revendications

1. Moteur à combustion interne, notamment moteur à carburateur à injection directe, notamment pour un véhicule automobile, comportant une culasse (10) à alésages récepteurs (12) pour les soupapes d'injection respectives (14) et une barrette distributrice de carburant (22) qui relie les soupapes d'injection (14) entre elles ainsi qu'à une alimentation en carburant, un élément à ressort (38) étant installé de manière à solliciter par force la soupape d'injection (14) en direction de l'alésage récepteur (12) et à la comprimer contre une butée (28) dans l'alésage récepteur (12), la butée (28) dans l'alésage récepteur (12) ayant une conformation plane et étant prévue, entre la soupape d'injection (14) et la butée (28), une bague d'assise (30) présentant une surface de butée (34) du côté de la soupape d'injection et une surface de butée (32) du côté de la butée, la surface de butée (34) située du côté de la soupape d'injection de la bague d'assise (30) ayant une conformation courbée ou de forme conique et la surface de butée (32) située du côté de la butée de la bague d'assise (30) ayant une conformation plane ou inversement, **caractérisé en ce que** la barrette distributrice de carburant (22) est disposée fixement par rapport à la culasse (10) et que l'élément à ressort (38) est disposé entre la barrette distributrice de carburant (22) et la soupape d'injection (14) de manière à s'appuyer sur la barrette distributrice de carburant (22), l'élément à ressort (38) et la bague d'assise (30) étant conçus de manière à pouvoir être assemblés avec la soupape d'injection (14) pour former une unité.

2. Moteur à combustion interne selon la revendication 1, **caractérisé en ce que** la surface de butée (34) située du côté de la soupape d'injection de la bague d'assise (30) est réalisée avec une forme bombée.

3. Moteur à combustion interne selon l'une quelconque des revendications précédentes, **caractérisé en ce qu'**un contour d'une surface butant sur la surface de butée (34) située du côté de la soupape d'injection de la bague d'assise (30) de la soupape d'injection (14) est réalisé avec une forme bombée.

4. Moteur à combustion interne selon l'une quelconque des revendications précédentes, **caractérisé en ce que** la bague d'assise (30) est fabriquée en matière plastique.

5. Moteur à combustion interne selon l'une quelconque des revendications précédentes, **caractérisé en ce que** la bague d'assise (30) présente un dispositif d'assemblage à l'élément à ressort (38), notamment par clippage.

6. Moteur à combustion interne selon l'une quelconque des revendications précédentes, **caractérisé en ce que** l'élément à ressort (38) est conçu de manière à constituer, en coopération mécanique avec un dispositif de la barrette distributrice de carburant (22), une sécurité anti-torsion de la soupape d'injection (14) dans l'alésage récepteur (12).

7. Moteur à combustion interne selon l'une quelconque des revendications précédentes, **caractérisé en ce qu**'une rondelle d'étanchéité (18) est disposée et réalisée entre la soupape d'injection (14) et l'alésage récepteur (12) de manière à éviter une tension en cas de basculement de la soupape d'injection (14) dans l'alésage récepteur (12).
